# FASCICULE DE BREVET EUROPEEN

(11) **EP 1 810 514 B1**
(45) Date de publication et mention de la délivrance du brevet: **11.06.2014**
(21) Numéro de dépôt: 05817120.8
(22) Date de dépôt: 09.11.2005
(51) Int. Cl.: H04N 21/4367, H04N 21/8355, H04N 21/61

(54) **DISPOSITIF, SYSTEME ET PROCEDE DE PRESENTATION D'UN SIGNAL COMPORTANT UN CONTENU AUDIOVISUEL**
VORRICHTUNG, SYSTEM UND VERFAHREN ZUR DARSTELLUNG EINES SIGNALS MIT AUDIOVISUELLEM INHALT
DEVICE, SYSTEM AND METHOD FOR THE PRESENTATION OF A SIGNAL HAVING AN AUDIO-VISUAL CONTENT

(30) Priorité: 10.11.2004 FR 0411996
(43) Date de publication de la demande: 25.07.2007
(73) Titulaire: Thomson Licensing, 92130 Issy-les-Moulineaux (FR)
(72) Inventeur: TANG TALPIN, Yan-Mei, F-35760 SAINT GREGOIRE (FR); DURAND, Alain, F-35000 RENNES (FR); HEEN, Olivier, F-35410 DOMLOUP (FR)
(74) Mandataire: Esselin, Sophie
(86) Numéro de dépôt international: PCT/FR2005/002796
(87) Numéro de publication internationale: WO 2006/051218

(56) Documents cités:
- WO-A-03/088243
- WO-A-03/088664
- US-A- 6 108 365
- RIPLEY M ET AL: "Content protection in the digital home" INTEL TECHNOLOGY JOURNAL INTEL CORP USA, [Online] vol. 6, no. 4, 15 novembre 2002 (2002-11-15), pages 49-56, XP002339786 ISSN: 1535-766X Extrait de l'Internet: URL:http://developer.intel.com/technology/ itj/2002/volume06issue04/art05_protection/ vol6iss4_art05.pdf> [extrait le 2005-08-08]

## Description

La présente invention concerne un système et un procédé de présentation d'un signal comportant un contenu audiovisuel.

En particulier, l'invention concerne un système de présentation d'un signal comportant un contenu audiovisuel, le système comprenant :
- un dispositif d'accès comportant des moyens de réception du signal, des moyens de décodage du signal propres à générer un signal décodé, et des moyens d'émission du signal décodé vers un dispositif de présentation ;
- un dispositif de présentation comportant des moyens de connexion, des moyens de présentation du contenu audiovisuel et un module de transmission du signal monté dans le même contenant que les moyens de présentation ; le module de transmission comprenant des moyens de mémorisation d'une première information d'identification ; et
- un canal de transmission extérieur au dispositif de présentation, raccordé aux moyens d'émission du dispositif d'accès et aux moyens de connexion du dispositif de présentation.

Les fournisseurs de contenus audiovisuels restreignent la diffusion de ceux-ci à des zones géographiques définies. Par exemple, dans certains états des Etats-Unis, la diffusion d'un match de hockey est limitée à une zone géographique située au-delà d'un périmètre de 100 kilomètres du stade de jeu de ce match.

A cette fin, il est connu de diffuser des signaux audiovisuels par satellite sur des zones géographiques délimitées ou de transmettre une information de zone géographique de diffusion autorisée dans les signaux audiovisuels transmis par câble.

Un dispositif d'accès, par exemple un boîtier décodeur, connecté en amont d'un dispositif de présentation, réceptionne ces signaux et vérifie si l'information de zone de diffusion autorisée correspond à une information de zone géographique enregistrée dans sa mémoire. Lorsque ces informations coïncident, le dispositif d'accès traite le signal audiovisuel et le transmet au dispositif de présentation.

Ainsi, le document WO 03/088664 décrit un dispositif propre à comparer une information de zone de diffusion géographique autorisée stockée dans une mémoire à une information de zone géographique contenue dans le signal et à transmettre le signal à un écran lorsque ces deux informations correspondent.

Toutefois, ce dispositif n'est pas fiable car il est possible de vérifier la zone de diffusion autorisée dans une première zone, puis de transmettre le signal à un écran distant situé dans une autre zone géographique, par exemple par transmission sur un réseau longue distance.

L'invention a pour but de proposer un système de présentation interdisant la présentation d'un contenu audiovisuel lorsque celui-ci n'est pas destiné à être diffusé dans la zone géographique du système de présentation.

A cet effet, l'invention a pour objet un système de présentation selon les caractéristiques de la revendication 1.

Suivant des modes particuliers de réalisation, le système de présentation comporte les caractéristiques des revendications dépendantes.

L'invention a également pour objet un procédé de présentation selon les caractéristiques de la revendication 10.

L'invention sera mieux comprise à la lecture de la description qui va suivre, donnée uniquement à titre d'exemple et faite en se référant aux dessins annexés, sur lesquels :
- la Fig.1 est une vue schématique d'un système de présentation selon l'invention ; et
- la Fig.2 est un organigramme représentant le procédé de présentation selon l'invention.

Dans l'exemple de réalisation de l'invention décrit, le signal audiovisuel comprend un contenu principal tel qu'un extrait musical et/ou une séquence d'images ainsi qu'une information de zone géographique de diffusion autorisée notée GLI.

Cette information comprend, par exemple, un code de deux caractères qui représente un pays, tel que spécifié dans une liste de codes de pays définie dans la norme ISO 3166-1 : 1997. Cette information peut être simple, tel qu'un code de deux caractères représentatif d'une région géographique ou complexe, tel qu'un ensemble de plusieurs codes ou un code représentatif de plusieurs pays comme par exemple le code « EP » pour Europe qui correspond à un ensemble de différents codes comprenant notamment « ES » pour Espagne et « IT » pour Italie.

Cette information de zone géographique de diffusion autorisée GLI est ajoutée au contenu principal pour former le signal audiovisuel, par exemple, par tatouage numérique ou de manière préférentielle, en étant incluse dans une licence contenant tous les droits numériques associés au contenu.

On notera que l'information GLI est transmise dans le contenu en étant protégée, notamment par chiffrement, contre toute modification.

Pour garantir l'intégrité de l'information GLI, celle-ci peut notamment être transmise dans un paquet de données chiffrées, dans un paquet de données signées ou bien dans un paquet de données auquel est joint un condensé (ou « digest ») des données, le condensé étant réalisé par application d'une fonction de hachage aux données.

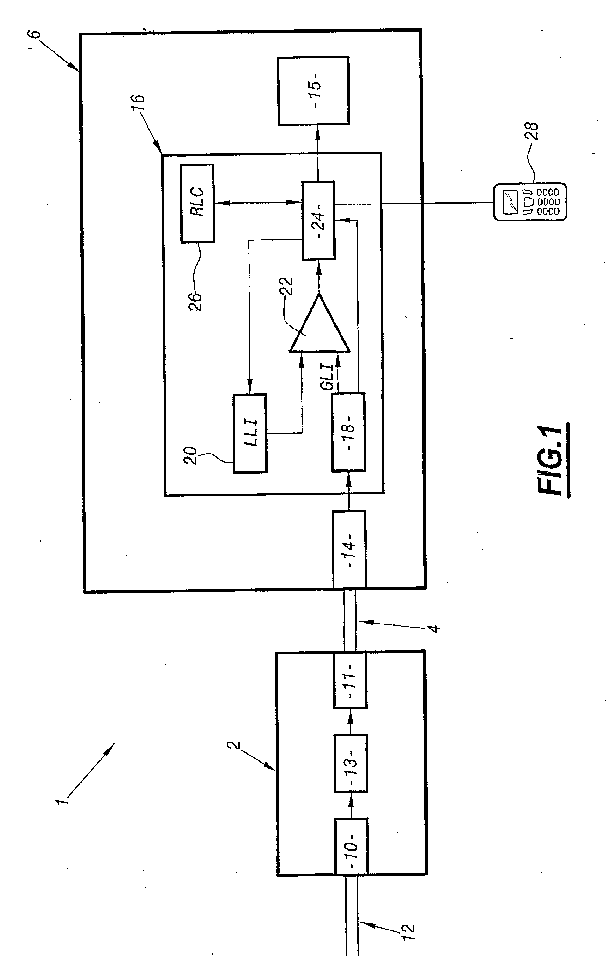

Le système de présentation 1 d'un contenu audiovisuel selon l'invention est illustré schématiquement sur la Fig.1. Celui-ci comporte un dispositif d'accès 2, par exemple un boîtier décodeur numérique, un canal de communication 4 et un dispositif de présentation 6, par exemple un téléviseur numérique.

Le boîtier décodeur 2 constitue la source d'entrée de tout signal transportant un contenu reçu par le système 1. A cette fin, le décodeur 2 comporte des moyens de réception 10 et des moyens d'émission 11 du signal d'affichage, raccordés à une ligne de transmission 12 et au canal de communication 4, respectivement. La ligne de transmission 12 est connectée à une antenne recevant des ondes hertziennes ou « terrestres », à un réseau numérique, ou encore à une antenne satellite. Le signal audiovisuel véhiculé sur la ligne de transmission 12 comprend l'information GLI.

Le dispositif d'accès 2 est propre à décoder les signaux d'affichage codés provenant de différentes sources. A cet effet, il comprend des moyens de décodage 13 du signal reliés, en entrée, aux moyens de réception 10 et en sortie, aux moyens d'émission 11. Les moyens de décodage 13 sont aptes à décoder les signaux numériques reçus, comme cela est connu dans l'état de la technique.

Les moyens de décodage 13 ne sont pas adaptés pour vérifier la concordance entre l'information de zone géographique de diffusion autorisée GLI contenue dans le signal reçu et une zone prédéfinie.

En effet, si cette vérification est effectuée au niveau du boîtier décodeur 2 dans le système de présentation 1, la vérification ne sera efficace que si le décodeur 2 et le dispositif de présentation 6 se trouvent au même endroit, ou en tout cas, dans la même zone géographique. Si en revanche, les dispositifs d'accès 2 et de présentation 6 se trouvent dans des zones géographiques différentes, en utilisant par exemple comme canal de communication 4 le réseau Internet, l'information GLI pourra concorder avec la zone géographique du boîtier décodeur 2, mais ne pas concorder avec celle du téléviseur numérique 6 où se situe l'affichage du signal. Par conséquent, avantageusement et selon l'invention, la vérification de l'information GLI contenue dans le signal est effectuée dans le dispositif 6 de présentation du signal.

Après décodage, les moyens d'émission 11 du boîtier décodeur transmettent donc au téléviseur numérique 6, le signal d'affichage décodé mais comportant toujours l'information GLI. L'information GLI est de plus transmise de manière protégée dans le signal pour que l'utilisateur du système de présentation 1 ne puisse pas la transformer frauduleusement pour accéder à un contenu dans une zone géographique non autorisée. A cet effet, les moyens de décodage 13 sont propres à préserver la seconde information d'identification GLI contenue dans le signal ou à réintroduire cette information GLI après extraction de celle-ci pour transmission de celle-ci au dispositif de présentation 6.

Le canal de communication 4 assure la liaison du boîtier décodeur 2 au téléviseur 6. Il est constitué par tout type de lignes de transmission longue distance de données numériques, telles que par exemple une fibre optique, une ligne d'abonné numérique à débit asymétrique ou, au contraire, tout type de lignes courte distance comme par exemple un câble coaxial ou un bus selon les normes IEEE 1394.I.

Le téléviseur numérique 6 est propre à transformer le signal d'affichage décodé reçu du canal 4 en un contenu audiovisuel destiné à être présenté à un utilisateur final.

Le téléviseur 6 comporte des moyens de connexion 14 au canal 4, des moyens 15 de présentation du contenu raccordés à un module de transmission 16.

Les moyens de connexion 14 sont propres à recevoir le signal d'affichage décodé transmis à flux tendu par le boîtier décodeur 2, et à l'envoyer au module de transmission 16.

Les moyens de présentation 15 sont propres à afficher et/ou restituer le contenu du signal décodé. Ils sont formés par exemple d'un écran et/ou de haut-parleurs.

Le module de transmission 16 est apte à transmettre le signal décodé aux moyens de visualisation 15, seulement si une information de zone de diffusion notée LLI est identique à (lorsque le code de pays est simple) ou correspond à (lorsque le code de pays est complexe) l'information de zone de diffusion GLI contenue dans le signal.

A cet effet, le module 16 comprend des moyens de lecture 18 raccordés aux moyens de connexion 14, et une mémoire 20.

Les moyens de lecture 18 sont aptes à lire l'information de zone géographique de diffusion autorisée GLI contenue dans le signal, ou à l'extraire par exemple, par démultiplexage.

La mémoire 20 est adaptée pour mémoriser l'information de zone de diffusion LLI. La mémoire 20 comprend une mémoire non volatile de type EEPROM (Electrically Erasable Programmable Read Only Memory) ou équivalent. Elle est vierge lors de la première utilisation du téléviseur 6, ou comporte une zone de diffusion LLI préenregistrée par le constructeur du téléviseur 6.

Le module de transmission 16 comporte en outre des moyens de comparaison 22, des moyens de surveillance 24, et un compteur 26.

Les moyens de comparaison 22 sont adaptés pour comparer l'information de zone de diffusion GLI contenue dans le signal d'affichage décodé à l'information de zone de diffusion LLI enregistrée dans la mémoire 20 et pour délivrer aux moyens de surveillance 24, un signal de validation lorsque l'information de zone GLI du signal concorde avec l'information de zone LLI enregistrée dans la mémoire 20.

A cet effet, les entrées des moyens de comparaison 22 sont raccordées aux moyens de lecture 18 et à la mémoire 20. La sortie des moyens de comparaison 22 est raccordée aux moyens de surveillance 24.

Les moyens de surveillance 24 sont aptes à autoriser la transmission du signal d'affichage décodé aux moyens de présentation 15, sur réception du signal de validation généré par les moyens de comparaison 22 et à interdire cette transmission sur réception d'un signal de non validation généré par les moyens de comparaison 22.

Les moyens de surveillance 24 sont raccordés aux moyens de lecture 18, pour recevoir le signal d'affichage et aux moyens de présentation 15, pour leur transmettre celui-ci.

En particulier, les moyens de présentation 15 sont propres à recevoir le signal d'affichage décodé provenant directement et uniquement des moyens de surveillance 24. La connexion entre les moyens de surveillance 24 et les moyens de présentation 15 ne comporte aucune connexion autorisant l'entrée d'un signal d'affichage décodé.

De plus, les moyens de surveillance 24 sont propres à remplacer l'information de zone de diffusion LLI enregistrée dans la mémoire 20 par l'information de zone de diffusion GLI contenue dans le signal lorsque ces informations ne coïncident pas entre elles. Ce remplacement est réalisé sans l'intervention de l'utilisateur. Il est toutefois limité à un nombre de remplacements maximal possible prédéfini qui correspond au nombre de changements de zones géographiques autorisés.

A cette fin, les moyens de surveillance 24 sont donc connectés à la mémoire 20 et à un compteur 26 de dénombrement du nombre de remplacements autorisés restant RLC.

Ce compteur 26 est initialisé avec le nombre de remplacements maximal autorisé et il est apte à être décrémenté, sur commande des moyens de surveillance 24, à chaque fois que l'information de zone de diffusion LLI stockée dans la mémoire 20 est remplacée par une information différente de zone de diffusion GLI contenue dans le signal.

Les moyens de surveillance 24 sont raccordés à des moyens de sélection 28 constitués, par exemple, par une télécommande ou des interrupteurs de sélection pour permettre à l'utilisateur d'autoriser ou de refuser le dernier remplacement possible de l'information de zone géographique de diffusion LLI enregistrée dans la mémoire 20 par l'information de zone géographique de diffusion GLI contenue dans le signal décodé, comme cela sera explicité dans la suite de la description.

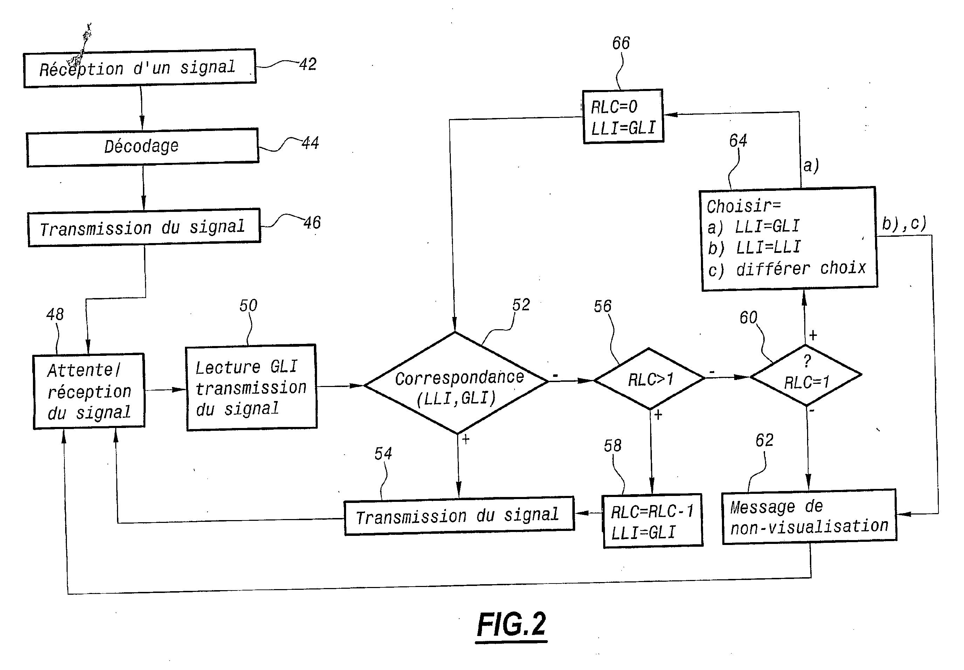

En fonctionnement, au cours d'une étape 42 représentée sur la Fig.2, les moyens de réception 10 du boîtier décodeur réceptionnent un signal d'affichage, par exemple au format MPEG 2, par la ligne de transmission 12.

Puis, ce signal d'affichage est transmis aux moyens de décodage 13.

Au cours d'une étape 44, les moyens de décodage 13 décodent le signal d'affichage. Le signal ainsi décodé comporte toujours l'information de zone géographique de diffusion autorisée GLI.

Les moyens de décodage 13 peuvent également communiquer avec le serveur du fournisseur de contenu audiovisuel lorsque le contenu audiovisuel est payant, chiffrer le signal d'affichage selon un format spécifique au réseau interne et éventuellement, pour un réseau domestique, transformer le protocole du signal de type réseau longue distance en un protocole de type réseau courte distance (LAN Local Array Network) et/ou transformer le signal numérique en signal analogique, lorsque le téléviseur 6 est un téléviseur analogique.

Pendant une étape 46, les moyens d'émission 11 transmettent le signal d'affichage ainsi que l'information GLI contenue dans celui-ci au téléviseur 6, par le canal 4.

Puis, au cours d'une étape 48, les moyens de connexion 14 réceptionnent ce signal.

Lors d'une étape 50, les moyens de lecture 18 lisent ou extraient l'information de zone de diffusion autorisée GLI du signal d'affichage décodé et transmettent d'une part, cette information GLI, aux moyens de comparaison 22 et d'autre part, le contenu audiovisuel aux moyens de surveillance 24.

Pendant une étape 52, les moyens de comparaison 22 comparent l'information de zone de diffusion autorisée GLI lue par les moyens de lecture 18, à l'information de zone de diffusion LLI enregistrée dans la mémoire 20.

Lorsqu'aucune information de zone de diffusion LLI n'est enregistrée dans la mémoire 20 comme, par exemple, lors de la première utilisation du téléviseur 6, les moyens de comparaison 22 transmettent aux moyens de surveillance 24, un signal de validation représentatif d'une concordance entre les informations GLI et LLI.

Lorsque l'information stockée LLI correspond à l'information provenant du signal GLI, les moyens de comparaison 22 transmettent un signal de validation aux moyens de surveillance 24. Sur réception de ce signal de validation, les moyens de surveillance 24 transmettent le contenu audiovisuel aux moyens de présentation 15, au cours d'une étape 54.

Après visualisation de ce contenu, le procédé passe à l'étape 48, au cours de laquelle les moyens de connexion 14 attendent la réception d'un nouveau signal décodé.

Lorsque l'information stockée LLI ne correspond pas à l'information GLI provenant du signal, les moyens de comparaison 22 délivrent un signal de non-validation aux moyens de surveillance 24, et le procédé passe à l'étape 56.

Au cours de cette étape 56, les moyens de surveillance 24 interrogent le compteur 26 pour savoir si le nombre de remplacements autorisés restant RLC est supérieur à 1.

Lorsque ce nombre RLC est supérieur à 1, les moyens de surveillance 24 transmettent une impulsion au compteur 26 afin que celui-ci décrémente ce nombre RLC, au cours d'une étape 58. Parallèlement, les moyens de surveillance 24 envoient l'information GLI provenant du signal, à la mémoire 20 et remplacent l'information précédemment stockée LLI par l'information GLI provenant du signal.

Puis, les moyens de surveillance 24 transmettent le contenu audiovisuel reçu par les moyens de lecture 18 aux moyens de visualisation 15, au cours de l'étape 54.

Lorsque l'information de zone de diffusion LLI stockée dans la mémoire 20 est un code de zone géographique complexe, comme par exemple le code « EP » pour l'Europe, et que le signal comprend un code de zone géographique GLI simple correspondant à un pays de l'Europe, tel que le code « DE » pour l'Allemagne, le nombre RLC n'est pas décrémenté.

Lorsque l'information de zone de diffusion LLI stockée dans la mémoire 20 est un code de zone géographique simple d'un pays provenant de l'Europe, tel que le code « IT » pour l'Italie et que le signal comprend un code de zone géographique GLI complexe correspondant à l'Europe, le nombre RLC n'est pas décrémenté. Dans ce cas, l'information LLI stockée dans la mémoire 20 reste le code de zone géographique simple « IT ». Cette information LLI n'est pas remplacée par le code complexe correspondant à l'Europe.

Lorsque le nombre RLC n'est pas supérieur à 1, les moyens de surveillance 24 vérifient au cours d'une étape 60, si ce nombre est égal à 1.

Lorsque ce nombre n'est pas égal à 1, et que donc il est égal à 0, l'information LLI enregistrée dans la mémoire 20 ne peut plus être remplacée. Dans ce cas, le module de surveillance 24 envoie au cours d'une étape 62, un message aux moyens de présentation 15 informant l'utilisateur que le contenu du signal d'affichage ne peut pas être visualisé car la zone de diffusion GLI de celui-ci ne correspond pas à la zone de diffusion LLI stockée dans le téléviseur.

Puis, le procédé retourne à l'étape 48 au cours de laquelle les moyens de connexion 14 attendent la réception d'un nouveau signal d'affichage.

Lorsque le nombre RLC est égal à 1, les moyens de surveillance 24 envoient un message d'information aux moyens de visualisation 15 au cours d'une étape 64. Ce message avertit l'utilisateur qu'il ne lui reste plus qu'une seule possibilité de remplacement de l'information de zone de diffusion autorisée LLI enregistrée dans la mémoire 20 et lui propose trois possibilités.

Selon la possibilité a), l'information de zone de diffusion LLI enregistrée dans la mémoire 20, est remplacée par l'information de zone de diffusion GLI provenant du signal. L'utilisateur n'a dorénavant plus la possibilité de remplacer une nouvelle fois cette information.

Selon la possibilité b), l'information de zone de diffusion LLI enregistrée dans la mémoire 20 n'est pas remplacée et l'utilisateur ne peut pas visualiser le contenu du signal d'affichage décodé.

Selon la possibilité c), le choix de l'utilisateur est différé et le contenu du signal d'affichage décodé n'est pas visualisé.

Lorsque l'utilisateur sélectionne la possibilité a) à l'aide des moyens de sélection 28, les moyens de surveillance 24 transmettent, au cours d'une étape 66, une impulsion au compteur 26 qui décrémente le nombre RLC, de sorte que celui-ci soit nul.

Parallèlement, les moyens de surveillance 24 enregistrent l'information de diffusion GLI provenant du signal dans la mémoire 20 en remplacement de l'information de zone de diffusion LLI préalablement stockée, au cours d'une étape 66.

Puis, au cours de l'étape 52, les moyens de comparaison 22 vérifient la correspondance entre l'information de zone de diffusion GLI provenant du signal d'affichage décodé et l'information de zone de diffusion LLI enregistrée dans la mémoire 20. Comme ces informations sont identiques suite à l'étape 66, les moyens de comparaison 22 envoient un signal de validation aux moyens de surveillance 24 qui transmettent le contenu audiovisuel aux moyens de visualisation 15, au cours de l'étape 54.

Lorsque l'utilisateur sélectionne la possibilité b) ou c) à l'aide des moyens de sélection 28, le nombre RLC enregistré dans le compteur 26 et l'information LLI enregistrée dans la mémoire 20, ne sont pas modifiés et les moyens de surveillance 24 transmettent aux moyens de visualisation 15, au cours de l'étape 62, un message informant l'utilisateur qu'il ne lui sera pas possible de visualiser le contenu du signal d'affichage décodé.

En variante, le dispositif de présentation 6 est un haut-parleur. Dans ce cas, le signal d'affichage est un signal audio joué par des moyens de présentation.

En variante, le dispositif de présentation 6 est un ordinateur. Dans ce cas, le signal d'affichage est exécuté par des moyens de présentation.

En variante, le dispositif d'accès 2 est un appareil lecteur de disque optique diffusant sur le canal numérique 4 des données lues sur un disque, notamment un DVD (acronyme de l'anglais «digital versatile disque », signifiant « disque numérique polyvalent ») ou un dispositif d'enregistrement numérique ou encore un ordinateur adapté pour recevoir des données d'un réseau de transmission par paquets (Internet), par téléchargement en temps réel, c'est-à-dire en visualisant le contenu au fur et à mesure du chargement.

En variante, le dispositif d'accès 2 comporte un module propre à insérer dans le signal représentant le contenu, une information de zone de diffusion autorisée GLI. Cette zone de diffusion correspond par exemple, à la zone géographique de vente du dispositif d'accès. Ce module du dispositif d'accès peut également recevoir l'information GLI dans une licence contenant des droits d'accès au contenu, la licence étant transmise indépendamment du contenu dans le cadre d'un système de gestion des droits dits DRM (acronyme de l'anglais « Digital Rights Management » signifiant « Gestion des Droits Numériques »).

En variante, le signal audiovisuel transmis par les fournisseurs de contenu est codé et les moyens de surveillance 24 du téléviseur 6 sont propres à le décoder, si l'information de zone GLI du signal concorde avec l'information de zone LLI enregistrée dans la mémoire 20 ou si le nombre maximal de changements de zones géographiques autorisé n'est pas atteint.

## Revendications

1. Système de présentation (1) d'un signal comportant un contenu audiovisuel, le système (1) comprenant :
- un dispositif d'accès (2) comportant des moyens de réception (10) du signal, des moyens de décodage (13) du signal propres à générer un signal décodé, et des moyens d'émission (11) du signal décodé vers un dispositif de présentation (6);
- un dispositif de présentation (6) comportant des moyens de connexion (14), des moyens de présentation (15) du contenu audiovisuel et un module (16) de transmission du signal monté dans le même contenant que les moyens de présentation (15); le module (16) de transmission comprenant des moyens (20) de mémorisation d'une première information d'identification (LLI);
- un canal de transmission (4) extérieur au dispositif de présentation (6), raccordé aux moyens d'émission (11) du dispositif d'accès (2) et aux moyens de connexion (14) du dispositif de présentation (6) ;
**caractérisé en ce que** les moyens de décodage (13) sont aptes à préserver une seconde information d'identification (GLI) contenue dans le signal ou à réintroduire cette information (GLI) après extraction de celle-ci pour transmission de celle-ci aux moyens de connexion (14) du dispositif de présentation (6), par l'intermédiaire du canal de transmission (4), et **en ce que**
- le module de transmission (16) est propre à recevoir le signal des moyens de connexion (14) et à le transmettre aux moyens de présentation (15) seulement si la première information d'identification (LLI) concorde avec la seconde information d'identification (GLI) contenue dans le signal.

2. Système selon la revendication 1, **caractérisé en ce que** la seconde information d'identification (GLI) comprend une information de zone géographique de diffusion autorisée.

3. Système selon l'une quelconque des revendications 1 et 2, **caractérisé en ce que** la seconde information d'identification (GLI) contenue dans le signal réceptionné par le dispositif de présentation (6) est protégée, notamment par chiffrement, contre toute modification.

4. Système selon l'une quelconque des revendications 1 à 3, **caractérisé en ce que** la première information d'identification (LLI) stockée dans le module de transmission (16) comprend la seconde information d'identification (GLI) contenue dans le signal précédemment présenté par les moyens de présentation (15).

5. Système selon l'une quelconque des revendications précédentes, **caractérisé en ce que** le module de transmission (16) comprend en outre :
- des moyens de lecture (18) de la seconde information d'identification (GLI) contenue dans le signal ;
- des moyens de comparaison (22) de la première information d'identification (LLI) à la seconde information d'identification (GLI) ; et
- des moyens de surveillance (24) propres à transmettre aux moyens de présentation (15) le signal réceptionné par les moyens de connexion (14), lorsque la première information d'identification (LLI) concorde avec la seconde information d'identification (GLI).

6. Système selon la revendication 5, **caractérisé en ce que** les moyens de surveillance (24) sont propres à remplacer, un nombre prédéfini de fois, la première information d'identification (LLI) par la seconde information d'identification (GLI), lorsque ces informations ne coïncident pas entre elles.

7. Système selon la revendication 6, **caractérisé en ce que**, avant le dernier remplacement, les moyens de surveillance (24) sont adaptés pour envoyer aux moyens de présentation (15) un message contenant une demande de sélection entre d'une part, un dernier remplacement de la première information d'identification (LLI) et, d'autre part, le non replacement de cette première information d'identification (LLI).

8. Système selon l'une quelconque des revendications 6 et 7, **caractérisé en ce que**, à l'issue du dernier remplacement, les moyens de surveillance (24) sont propres à envoyer aux moyens de présentation (15) un message informant l'utilisateur que le contenu du signal ne peut pas être visualisé lorsque la seconde information d'identification (GLI) ne correspond pas à la première information d'identification (LLI).

9. Système selon l'une quelconque des revendications précédentes, **caractérisé en ce que** les moyens de décodage (13) sont externes au dispositif de présentation (6).

10. Procédé de présentation d'un signal comportant un contenu audiovisuel par un système de présentation (1) comprenant un dispositif d'accès (2) et un dispositif de présentation (6), **caractérisé en ce qu'**il comporte les étapes successives suivantes :
- décodage (44) du signal par le dispositif d'accès (2), une deuxième information d'identification (GLI) contenue dans le signal étant préservée lors du décodage du signal ou étant réintroduite dans le signal après extraction de celle-ci ;
- transmission (46) du signal décodé du dispositif d'accès (2) vers des moyens de connexion (14) du dispositif de présentation (6) par un canal de transmission (4) raccordé aux moyens de connexion (14) du dispositif de présentation (6) et extérieur au dispositif de présentation (6) ;
- réception (48) du signal décodé par les moyens de connexion (14) du dispositif de présentation (6);
- transmission (54) du signal décodé des moyens de connexion (14) vers des moyens de présentation (15) contenus dans le dispositif de présentation (6), seulement si la seconde information d'identification (GLI) comprise dans le signal concorde avec une première information d'identification (LLI) stockée dans des moyens de mémorisation (20) du dispositif de présentation (6); et
- affichage du contenu audiovisuel du signal par les moyens de présentation (15) du dispositif de présentation (6) dans le cas où la transmission a eu lieu lors de l'étape précédente.

## Patentansprüche

1. System (1) zur Darstellung eines Signals mit einem audiovisuellen Inhalt, wobei das System (1) Folgendes umfasst:
- eine Zugriffsvorrichtung (2) mit Mitteln (10) für den Empfang des Signals, Mitteln (3) zur Signaldekodierung, welche geeignet sind, ein dekodiertes Signal zu erzeugen, und Mitteln (11), um das dekodierte Signal an eine Darstellungsvorrichtung (6) zu senden,
- eine Darstellungsvorrichtung (6) mit Anschlussmitteln (14), Mitteln (15) für die Darstellung des audiovisuellen Inhalts und einem Modul (16) für die Signalübertragung, welches in demselben Behälter montiert ist wie die Darstellungsmittel (15), wobei das Übertragungsmodul (16) Mittel (20) zum Speichern einer ersten Identifikationsinformation (LLI) umfasst,
- einen außerhalb der Darstellungsvorrichtung (6) angeordneten Übertragungskanal (4), der mit den Sendemitteln (11) der Zugriffsvorrichtung (2) und den Anschlussmitteln (14) der Darstellungsvorrichtung (6) verbunden ist,
**dadurch gekennzeichnet, dass** die Dekodierungsmittel (13) geeignet sind, eine zweite, in dem Signal enthaltene Identifikationsinformation (GLI) zu sichern oder diese Information (GLI) nach ihrem Auslesen für ihre Übertragung an die Anschlussmittel (14) der Darstellungsvorrichtung (6) über den Übertragungskanal (4) wiedereinzuführen, und dass das Übertragungsmodul (16) geeignet ist, das Signal von den Anschlussmitteln (14) zu empfangen und es an die Darstellungsmittel (15) nur zu übertragen, wenn die erste Identifikationsinformation (LLI) mit der zweiten, in dem Signal enthaltenen Identifikationsinformation (GLI) übereinstimmt.

2. System nach Anspruch 1, **dadurch gekennzeichnet, dass** die zweite Identifikationsinformation (GLI) eine Information über ein geografisches Gebiet mit zulässiger Verbreitung umfasst.

3. System nach einem beliebigen der Ansprüche 1 und 2, **dadurch gekennzeichnet, dass** die zweite Identifikationsinformation (GLI), die in dem durch die Darstellungsvorrichtung (6) empfangenen Signal enthalten ist, insbesondere durch Verschlüsselung gegen Änderungen geschützt ist.

4. System nach einem beliebigen der Ansprüche 1 bis 3, **dadurch gekennzeichnet, dass** die erste, in dem Übertragungsmodul (16) gespeicherte Identifikationsinformation (LLI) die zweite Identifikationsinformation (GLI) umfasst, die in dem Signal enthalten ist, das zuvor von den Darstellungsmitteln (15) dargestellt wurde.

5. System nach einem beliebigen der vorhergehenden Ansprüche, **dadurch gekennzeichnet, dass** das Übertragungsmodul (16) ferner Folgendes umfasst:
- Mittel (18) zum Lesen der zweiten, in dem Signal enthaltenen Identifikationsinformation (GLI),
- Mittel, um die erste Identifikationsinformation (LLI) mit der zweiten Identifikationsinformation (GLI) zu vergleichen, und
- Überwachungsmittel (24), die geeignet sind, das durch die Anschlussmittel (14) empfangene Signal an die Darstellungsmittel (15) zu übertragen, wenn die erste Identifikationsinformation (LLI) mit der zweiten Identifikationsinformation (GLI) übereinstimmt.

6. System nach Anspruch 5, **dadurch gekennzeichnet, dass** die Überwachungsmittel (24) geeignet sind, eine vorbestimmte Anzahl von Malen die erste Identifikationsinformation (LLI) durch die zweite Identifikationsinformation (GLI) zu ersetzen, wenn diese Informationen nicht miteinander übereinstimmen.

7. System nach Anspruch 6, **dadurch gekennzeichnet, dass** vor dem letzten Ersetzen die Überwachungsmittel (24) geeignet sind, an die Darstellungsmittel (15) eine Nachricht zu senden, die eine Anfrage bezüglich einer Auswahl zwischen einem letzten Ersetzen der ersten Identifikationsinformation (LLI) einerseits und dem Nichtersetzen dieser ersten Identifikationsinformation (LLI) andererseits enthält.

8. System nach einem beliebigen der Ansprüche 6 und 7, **dadurch gekennzeichnet, dass** nach dem letzten Ersetzen die Überwachungsmittel (24) geeignet sind, an die Darstellungsmittel (15) eine Nachricht zu senden, mit der der Benutzer informiert wird, dass der Inhalt des Signals nicht angezeigt werden kann, wenn die zweite Identifikationsinformation (GLI) nicht mit der ersten Identifikationsinformation (LLI) übereinstimmt.

9. System nach einem beliebigen der vorhergehenden Ansprüche, **dadurch gekennzeichnet, dass** die Dekodierungsmittel (13) außerhalb der Darstellungsvorrichtung (6) angeordnet sind.

10. Verfahren zur Darstellung eines Signals mit einem audiovisuellen Inhalt durch ein Darstellungssystem (1), welches eine Zugriffsvorrichtung (2) und eine Darstellungsvorrichtung (6) umfasst, **dadurch gekennzeichnet, dass** es die folgenden sukzessiven Schritte umfasst:
- Dekodierung (44) des Signals durch die Zugriffsvorrichtung (2), wobei eine zweite, in dem Signal enthaltene Identifikationsinformation (GLI) bei der Signaldekodierung gesichert wird oder nach ihrem Auslesen in das Signal wiedereingeführt wird,
- Übertragung (46) des dekodierten Signals von der Zugriffsvorrichtung (2) zu Anschlussmitteln (14) der Darstellungsvorrichtung (6) über einen Übertragungskanal (4), der mit den Anschlussmitteln (14) der Darstellungsvorrichtung (6) verbunden ist und außerhalb der Darstellungsvorrichtung (6) angeordnet ist,
- Empfang (48) des dekodierten Signals durch die Anschlussmittel (14) der Darstellungsvorrichtung (6),
- Übertragung (54) des dekodierten Signals von den Anschlussmitteln (14) zu Darstellungsmitteln (15), die in der Darstellungsvorrichtung (6) enthalten sind, nur wenn die zweite, in dem Signal enthaltene Identifikationsinformation (GLI) mit einer ersten Identifikationsinformation (LLI) übereinstimmt, die in Speichermitteln (20) der Darstellungsvorrichtung (6) gespeichert ist, und
- Anzeige des audiovisuellen Inhalts des Signals durch die Darstellungsmittel (15) der Darstellungsvorrichtung (6), falls die Übertragung beim vorigen Schritt stattgefunden hat.

## Claims

1. System for presentation (1) of a signal having an audiovisual content, the system (1) comprising:
- an access device (2) comprising means for receiving (10) the signal, means for decoding (13) the signal suitable for generating a decoded signal, and means for transmitting (11) the decoded signal to a presentation device (6);
- a presentation device (6) comprising connection means (14), means for presentation (15) of the audiovisual content and a module (16) for transmission of the signal mounted in the same container as the presentation means (15); the transmission module (16) comprising means (20) for storing a first item of identification information (LLI);
- a transmission channel (4) external to the presentation device (6), connected to the transmission means (11) of the access device (2) and to the connection means (14) of the presentation device (6);
**characterised in that** the decoding means (13) are able to preserve a second item of identification information (GLI) contained in the signal or to reintroduce this item of information (GLI) after extraction thereof for transmission thereof to the connection means (14) of the presentation device (6), via the intermediary of the transmission channel (4), and **in that**
- the transmission module (16) is suitable for receiving the signal from the connection means (14) and transmitting it to the presentation means (15) only if the first item of identification information (LLI) corresponds to the second item of identification information (GLI) contained in the signal.

2. System according to claim 1, **characterised in that** the second item of identification information (GLI) comprises an item of information relating to authorised geographical area of broadcast.

3. System according to any one of claims 1 and 2, **characterised in that** the second item of identification information (GLI) contained in the signal received by the presentation device (6) is protected, notably by encryption, from any modification.

4. System according to any one of claims 1 to 3, **characterised in that** the first item of identification information (LLI) stored in the transmission module (16) comprises the second item of identification information (GLI) contained in the signal previously presented by the presentation means (15).

5. System according to one of the preceding claims, **characterised in that** the transmission module (16) further comprises:
- means for reading (18) the second item of identification information (GLI) contained in the signal;
- means for comparing (22) the first item of identification information (LLI) with the second item of identification information (GLI); and
- monitoring means (24) suitable for transmitting to the presentation means (15) the signal received by the connection means (14), when the first item of identification information (LLI) corresponds to the second item of identification information (GLI).

6. System according to claim 5, **characterised in that** the monitoring means (24) are suitable for replacing, a predefined number of times, the first item of identification information (LLI) with the second item of identification information (GLI), when these items of information do not coincide with each other.

7. System according to claim 6, **characterised in that**, before the last replacement, the monitoring means (24) are adapted to send to the presentation means (15) a message containing a request for selection between, on one hand, a last replacement of the first item of identification information (LLI) and, on the other hand, the non-replacement of this first item of identification information (LLI).

8. System according to any one of claims 6 and 7, **characterised in that**, at the end of the last replacement, the monitoring means (24) are suitable for sending to the presentation means (15) a message informing the user that the content of the signal cannot be viewed when the second item of identification information (GLI) does not correspond to the first item of identification information (LLI).

9. System according to any one of the preceding claims, **characterised in that** the decoding means (13) are external to the presentation device (6).

10. Method for presentation of a signal having an audiovisual content by a presentation system (1) comprising an access device (2) and a presentation device (6), **characterised in that** it comprises the following successive steps:
- decoding (44) of the signal by the access device (2), a second item of identification information (GLI) contained in the signal being preserved during the decoding of the signal or being reintroduced into the signal after extraction thereof;
- transmission (46) of the decoded signal from the access device (2) to the connection means (14) of the presentation device (6) by a transmission channel (4) connected to the connection means (14) of the presentation device (6) and external to the presentation device (6);
- reception (48) of the decoded signal by the connection means (14) of the presentation device (6);
- transmission (54) of the decoded signal from the connection means (14) to the presentation means (15) contained in the presentation device (6), only if the second item of identification information (GLI) comprised in the signal corresponds to a first item of identification information (LLI) stored in the storage means (20) of the presentation device (6); and
- display of the audiovisual content of the signal by the presentation means (15) of the presentation device (6) in the case where the transmission took place during the preceding step.
